# EUROPÄISCHE PATENTSCHRIFT

(11) **EP 2 404 794 B1**
(45) Veröffentlichungstag und Bekanntmachung des Hinweises auf die Patenterteilung: **29.05.2013**
(21) Anmeldenummer: 11450071.3
(22) Anmeldetag: 08.06.2011
(51) Int. Cl.: B60T 1/14

(54) **Vorrichtung zur Notbremsung eines Fahrzeugs**
Device for emergency braking of a vehicle
Dispositif de freinage d'urgence d'un véhicule

(30) Priorität: 05.07.2010 AT 11322010
(43) Veröffentlichungstag der Anmeldung: 11.01.2012
(73) Patentinhaber: Stangl Technik GmbH, 4860 Lenzing (AT)
(72) Erfinder: Stangl, Kurt, 4851 Gampern (AT)
(74) Vertreter: Hübscher, Helmut

(56) Entgegenhaltungen:
- DE-A1- 3 403 636
- US-A- 3 799 293

## Beschreibung

Die Erfindung bezieht sich auf eine Vorrichtung zur Notbremsung eines Fahrzeugs mit einer auf der Fahrzeugunterseite gelagerten, gegen eine Fahrbahn absenkbaren Bremsplatte, die an eine Vakuumpumpe angeschlossene, gegen die Fahrbahn offene Unterdruckkammern bildet.

Um im Fall einer Notbremsung die Bremskraft eines Fahrzeugs zu erhöhen, ist es bekannt (DE 2 229 442 C oder auf US 3 799 293 A), eine Bremsplatte mit mehreren gegen die Fahrbahn offene Unterdruckkammern vorzusehen, die über eine Vakuumpumpe mit Unterdruck beaufschlagt werden, sodass nach einem Absenken der zugfest mit dem Fahrzeug verbundenen Bremsplatte auf die Fahrbahn die Bremsplatte an die Fahrbahn angesaugt wird. Die dadurch bedingte Gleitreibung zwischen der Bremsplatte und der Fahrbahn bewirkt eine Bremskraft in Abhängigkeit einerseits vom Reibungskoeffizienten zwischen der Bremsplatte und der Fahrbahn und anderseits vom wirksamen Unterdruck. Zum Aufbau eines entsprechend wirksamen Unterdrucks ist eine ausreichende Abdichtung der Unterdruckkammern der Bremsplatte gegenüber der Fahrbahn erforderlich, was durch den Einsatz einer Bremsplatte in Form einer flexiblen Matte erreicht werden soll, die sich an die Unebenheiten der Fahrbahn anschmiegt. Aufgrund der angestrebten hohen Gleitreibung zwischen der Bremsplatte und der Fahrbahn unterliegt jedoch die Bremsplatte einem hohen Verschleiß, der einen wiederholten Einsatz einer solchen Vorrichtung zur Notbremsung eines Fahrzeugs gefährdet. Der Erfindung liegt somit die Aufgabe zugrunde, eine Notbremsvorrichtung der eingangs geschilderten Art so auszugestalten, dass ein wiederholter Einsatz möglich wird, ohne auf eine entsprechende Abdichtung der Unterdruckkammern der Bremsplatte verzichten zu müssen.

Die Erfindung löst die gestellte Aufgabe dadurch, dass auf der Unterseite der Bremsplatte ein zumindest im Bereich der Unterdruckkammern luftdurchlässiges, zugfestes Reibband vorgesehen ist, das in Fahrzeuglängsrichtung mit Abstand vor der Bremsplatte am Fahrzeug zugfest angreift.

Durch das Vorsehen eines die Bremsplatte unten abdeckenden, in Fahrzeuglängsrichtung mit Abstand vor der Bremsplatte am Fahrzeug angreifenden, zugfesten Reibband wird zunächst erreicht, dass nur das Reibband, nicht aber die Bremsplatte mit den Dichtungen für die Unterdruckkammern den im Bremsfall auftretenden, erheblichen Reibkräften ausgesetzt ist, sodass lediglich das Reibband einem entsprechenden Verschleiß unterworfen wird. Dazu kommt, dass die Bremskräfte über das Reibband auf das Fahrzeug übertragen werden, was eine wesentliche Voraussetzung für eine gewichtssparende Konstruktion der Notbremsvorrichtung darstellt, weil eben die Aufhängung der Bremsplatte nur deren Stellbewegung zwischen einer angehobenen Ruhelage und einer abgesenkten Arbeitsstellung zu berücksichtigen hat, in der eine der Höhe nach schwimmende Lagerung der Bremsplatte bevorzugt wird, um keine Druckentlastung insbesondere der gebremsten Hinterräder des Fahrzeugs aufgrund eines Anstelldruckes der Bremsplatte und damit eine Gefährdung der Seitenführung durch diese Hinterräder in Kauf nehmen zu müssen. Der Durchgriff der Unterdruckbeaufschlagung der Unterdruckkammern auf die Fahrbahn wird durch eine ausreichende Luftdurchlässigkeit des Reibbandes zumindest im Bereich der Unterdruckkammern sichergestellt. Mit dem Ansaugen der Bremsplatte an die Fahrbahn und der Übertragung der Bremskräfte über das zwischen der Fahrbahn und der Bremsplatte vorgesehene Reibband wird das Reibband im Abschnitt zwischen der Bremsplatte und seiner Anlenkstelle am Fahrzeug erheblichen Zugkräften ausgesetzt, die ein Spannen des Reibbandes bewirken, sodass das Reibband, wenn es über die Bremsplatte nach vorne in Fahrzeugslängsrichtung fortgeführt wird, eine geneigte Anlauffläche für auf der Fahrbahn befindliche Hindernisse mit dem Ergebnis bildet, dass die Bremsplatte durch das über das Hindernis hinweggleitende Reibband über das Hindernis angehoben wird und daher keine Beschädigungsgefahr für die Notbremsvorrichtung besteht. Da das Reibband einen Verschleißteil darstellt, sollte dieser Umstand konstruktiv berücksichtigt und das Reibband auswechselbar angeordnet werden.

Um mit mechanisch antreibbaren Vakuumpumpen ohne zusätzlichen Unterdruckspeicher einen ausreichenden Unterdruck in den Unterdruckkammern der Bremsplatte in einer für eine Notbremsung angemessen kurzen Zeitspanne aufbauen zu können, ist ein erheblicher Konstruktionsaufwand erforderlich. Zur Vermeidung eines solchen Aufwands kann die Vakuumpumpe als Strahlpumpe ausgebildet werden, wobei es sich zur Bereitstellung eines entsprechenden Treibstrahles empfiehlt, die Strahlpumpe über eine zündbare Treibladung mit Druckgas zu beaufschlagen, sodass unmittelbar nach dem Zünden der Treibladung ein für den Betrieb der Strahlpumpe ausreichender Treibstrahl aus den Treibgasen der Treibladung zur Verfügung gestellt werden kann.

In der Zeichnung ist der Erfindungsgegenstand beispielsweise dargestellt. Es zeigen
- Fig. 1: eine erfindungsgemäße Vorrichtung zur Notbremsung eines Fahrzeugs in einer schematischen Seitenansicht auf das Fahrzeug,

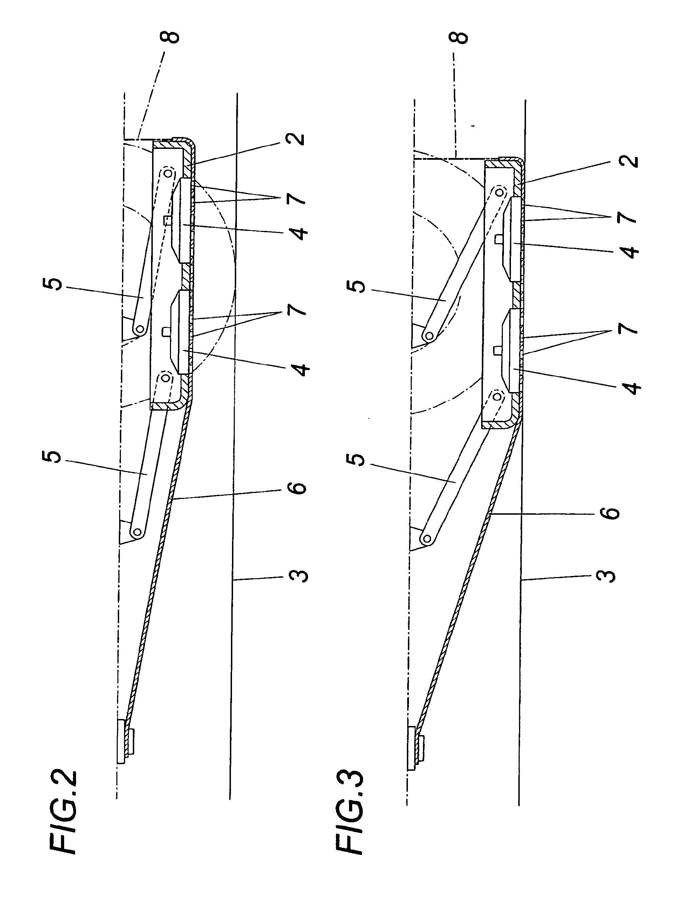

- Fig. 2: die erfindungsgemäße Notbremsvorrichtung in der Ruhestellung in einem schematischen Längsschnitt und
- Fig. 3: eine der Fig. 2 entsprechende Darstellung der Notbremsvorrichtung in der Bremsstellung.

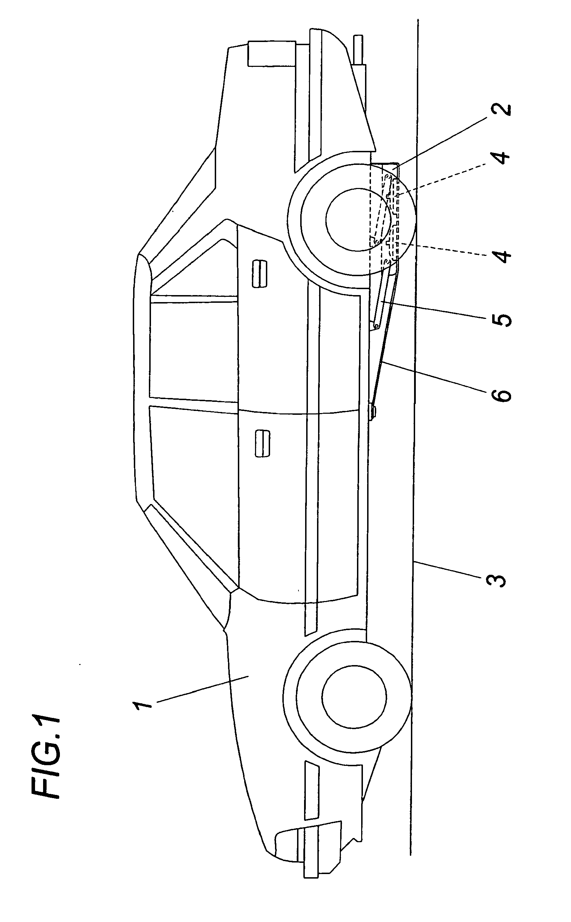

Wie insbesondere der Fig. 1 entnommen werden kann, ist im Bereich der Hinterachse eines Fahrzeugs 1, beispielsweise eines Personenkraftfahrzeugs, auf der Fahrzeugunterseite eine Bremsplatte 2 vorgesehen, die gegen die Fahrbahn 3 offene Unterdruckkammern 4, beispielsweise in Form von Saugglocken, aufweist. Diese Unterdruckkammern sind in herkömmlicher Weise an eine Vakuumpumpe angeschlossen, die vorzugsweise als Strahlpumpe ausgebildet ist und über eine zündbare Treibladung mit einem Treibgas beaufschlagt werden kann. Die Vakuumpumpe kann mit ihrer Steuerung dem Fahrzeug 1 zugeordnet werden, es ist aber auch möglich, sie auf der Bremsplatte 2 vorzusehen, was aufwendige Saugleitungen und die damit verbundenen Druckverluste vermeidet.

Die Bremsplatte 2 ist in einer angehobenen Ruhelage zu halten und im Bedarfsfall auf die Fahrbahn abzusenken. Obwohl sich hiefür unterschiedliche Konstruktionen eignen, ergeben sich besonders einfache Konstruktionsverhältnisse, wenn die Bremsplatte 2 über ein parallelogrammartiges Gelenkviereck auf der Fahrzeugunterseite der Höhe nach verlagerbar gehalten wird. Um eine für das Ansaugen der Bremsplatte 2 an die Fahrbahn 3 vorteilhafte Neigungsanpassung der Bremsplatte 2 an die jeweilige Fahrbahnoberfläche zu ermöglichen, kann die Bremsplatte 2 mit entsprechendem Bewegungsspiel im Gelenkviereck 5 aufgenommen sein, was allerdings aus Übersichtlichkeitsgründen nicht dargestellt ist.

Zum Unterschied zu bekannten Notbremsvorrichtungen dieser Art ist erfindungsgemäß zwischen der Bremsplatte 2 und der Fahrbahn 3 ein die Bremsplatte 2 unten abdeckendes Reibband 6 vorgesehen, das zugfest ausgebildet, im Bereich der Unterdruckkammern 4 mit Durchtrittsöffnungen 7 versehen und in Fahrzeuglängsrichtung mit Abstand vor der Bremsplatte 2 am Fahrzeug 1 angelenkt ist. Wird im Falle einer Notbremsung die lediglich strichpunktiert angedeutete Halteeinrichtung 8 gelöst, so senkt sich die Bremsplatte 2 auf die Fahrbahn 3 ab und drückt bei einer entsprechenden Beaufschlagung der Unterdruckkammern 4 mit einem Unterdruck das Reibband 6 an die Fahrbahn 3 an, sodass die dadurch bedingten Reibungskräfte das Fahrzeug 1 zusätzlich abbremsen. Die Bremskräfte werden dabei vom Reibband 6 auf das Fahrzeug 1 übertragen, was eine vorteilhafte Voraussetzung für eine leichte Konstruktion der Notbremsvorrichtung darstellt. Das Reibband 6 unterliegt zwar einem erheblichen Verschleiß, schützt aber die Bremsplatte 2 und die Abdichtungen ihrer Unterdruckkammern 4, sodass mit Ausnahme des Reibbandes 6 alle anderen Konstruktionsteile im Wesentlichen verschleißfrei bleiben. Dass das Reibband 6 einen Verschleißteil bildet, kann auch bei der Konstruktion entsprechend berücksichtigt werden, indem auf eine einfache Auswechselbarkeit des Reibbandes 6 Bedacht genommen wird. Nach einer Notbremsung kann die Bremsplatte vorzugsweise über die Halteeinrichtung 8 wieder in die Ruhelage angehoben werden.

## Patentansprüche

1. Vorrichtung zur Notbremsung eines Fahrzeugs (1) mit einer auf der Fahrzeugunterseite gelagerten, gegen eine Fahrbahn (3) absenkbaren Bremsplatte (2), die an eine Vakuumpumpe angeschlossene, gegen die Fahrbahn (3) offene Unterdruckkammern (4) bildet, **dadurch gekennzeichnet, dass** auf der Unterseite der Bremsplatte (2) ein zumindest im Bereich der Unterdruckkammern (4) luftdurchlässiges, zugfestes Reibband (6) vorgesehen ist, das in Fahrzeuglängsrichtung mit Abstand vor der Bremsplatte (2) am Fahrzeug (1) zugfest angreift.

2. Vorrichtung nach Anspruch 1, **dadurch gekennzeichnet, dass** das Reibband (6) auswechselbar angeordnet ist.

3. Vorrichtung nach Anspruch 1 oder 2, **dadurch gekennzeichnet, dass** die Vakuumpumpe als Strahlpumpe ausgebildet ist.

4. Vorrichtung nach Anspruch 3, **dadurch gekennzeichnet, dass** die Strahlpumpe über eine zündbare Treibladung mit Druckgas beaufschlagbar ist.

## Claims

1. Device for emergency braking of a vehicle (1) with a brake plate (2) which is mounted on the underside of the vehicle, can be lowered towards a road surface (3) and forms negative pressure chambers (4) which are attached to a vacuum pump and are open towards the road surface (3), **characterised in that** on the underside of the brake plate (2) a tension-proof friction belt (6), which is permeable to air at least in the region of the negative pressure chambers (4), is provided and engages in a tension-proof manner on the vehicle (1) at a distance in front of the brake plate (2) in the longitudinal direction of the vehicle.

2. Device as claimed in claim 1, **characterised in that** the friction belt (6) is disposed in a replaceable manner.

3. Device as claimed in claim 1 or 2, **characterised in that** the vacuum pump is formed as a jet pump.

4. Device as claimed in claim 3, **characterised in that** the jet pump can be subjected to compressed gas via an ignitable propellant charge.

## Revendications

1. Dispositif de freinage d'urgence d'un véhicule (1) avec une plaque de freinage (2) pouvant être abaissée vers une chaussée (3), logée sur le côté inférieur du véhicule et formant des compartiments de dépression (4) ouverts vers la chaussée (3) et raccordés à une pompe à vide, **caractérisé en ce que**, sur le côté inférieur de la plaque de freinage (2), il est prévu une bande de friction (6) résistant à la traction et perméable à l'air au moins dans la zone des compartiments de dépression (4) qui attaque, de manière résistante à la traction, au niveau du véhicule (1), dans le sens longitudinal du véhicule, avec un espacement devant la plaque de freinage (2).

2. Dispositif selon la revendication 1, **caractérisé en ce que** la bande de friction (6) est disposée interchangeable.

3. Dispositif selon la revendication 1 ou 2, **caractérisé en ce que** la pompe à vide est réalisée en tant que pompe à jet.

4. Dispositif selon la revendication 3, **caractérisé en ce que** la pompe à jet peut être alimentée en gaz sous pression par le biais d'une charge propulsive inflammable.
